# EUROPEAN PATENT SPECIFICATION

(11) **EP 3 189 965 B1**
(45) Date of publication and mention of the grant of the patent: **08.08.2018**
(21) Application number: 16204319.4
(22) Date of filing: 15.12.2016
(51) Int. Cl.: B32B 17/10

(54) **LAMINATED PLATE**
LAMINIERTE PLATTE
PLAQUE STRATIFIÉE

(30) Priority: 05.01.2016 JP 2016000548
(43) Date of publication of application: 12.07.2017
(73) Proprietor: ASAHI GLASS COMPANY, LIMITED, Tokyo 100-8405 (JP)
(72) Inventor: NOTSU, Keiji, Tokyo, Tokyo 100-8405 (JP); NAKANO, Atsushi, Tokyo, Tokyo 100-8405 (JP)
(74) Representative: Müller-Boré & Partner Patentanwälte PartG mbB

(56) References cited:
- JP-A- 2007 197 288
- US-A1- 2015 110 991

## Description

The disclosure herein generally relates to a laminated plate.

Conventionally, for example, as a window glass of a vehicle, a laminated glass obtained by bonding a first glass plate and a second glass plate via an intermediate film has been used.

For example, Japanese Unexamined Patent Application Publication No. 2007-197288 discloses a laminated glass using two glass plates, thicknesses of which are different from each other.

It is a general object of at least one embodiment of the present invention to provide a laminated plate that substantially obviates one or more problems caused by the limitations and disadvantages of the related art.

In order to achieve the above-described purpose, the present invention provides a laminated plate including a first plate, and a second plate that is bonded to the first plate via an intermediate film, wherein the first and the second plates are glass plates. The laminated plate further includes a first main surface of the first plate arranged on a side opposite to the intermediate film; a second main surface of the first plate being in contact with the intermediate film; a third main surface of the second plate being in contact with the intermediate film; and a fourth main surface of the second plate arranged on
a side opposite to the intermediate film. A thickness of the first plate is thicker than a thickness of the second plate. In at least a part of an outer periphery of the laminated plate, on a cross-sectional surface orthogonal to the outer periphery, the first plate has a first linear chamfered part which extends diagonally to the second main surface from an edge portion of the second main surface, and the second plate is located on an inner surface side of an extended line of the first linear chamfered part.

Other objects and further features of embodiments will become apparent from the following detailed description when read in conjunction with the accompanying drawings, in which:
FIG. 1 is a configuration diagram depicting a state where a laminated glass for vehicle that slides is mounted on a vehicle;
FIG. 2 is a plan view of a laminated plate according to an embodiment;
FIG. 3 is a cross-sectional diagram depicting a laminated plate cut along A-A in FIG. 2 according to a first embodiment;
FIG. 4 is a diagram depicting an example of a variation of the first embodiment;
FIG. 5 is a diagram depicting another example of the variation of the first embodiment;
FIG. 6 is a diagram depicting yet another example of the variation of the first embodiment;
FIG. 7 is a diagram depicting a state of a first glass plate and a second glass plate before bonded by an intermediate film, in the variation of the first embodiment;
FIG. 8 is a diagram depicting a laminated glass after bonding by the intermediate film from the state illustrated in FIG. 3;
FIG. 9 is a plan view depicting a laminated glass according to a second embodiment used as a front windshield of a vehicle; and
FIG. 10 is a cross-sectional diagram depicting the laminated glass according to the second embodiment used as the front windshield of the vehicle.

In the following, laminated plates according to embodiments of the present invention will be described with reference to the accompanying drawings. In the following description, a laminated glass used for a sliding window for a vehicle will be described as an example. However, the present invention is not limited to this. For example, the present invention may be applied to a window glass for construction, a glazing, a plastic plate and a decorative sheet used for inner and outer packaging of a vehicle.

Moreover, as a vehicle window, the present invention may be applied to, for example, a front windshield, a sliding window, a fit-in window, a rear windshield, a roof glass, or the like.

Moreover, in a drawing for describing the embodiment, a coordinate is defined by an arrow at bottom left in the drawing, and the coordinate will be used as necessary for description. Moreover, in the specification, "X-direction" is assumed to refer to not only a direction from a root to a top of an arrow representing X-coordinate, but also a direction, inverted by 180 degrees, from the top to the root. Similarly, "Y-direction" and "Z-direction" are assumed to refer to not only directions from roots to tops of arrows representing Y-coordinate and Z-coordinates, respectively, but also directions, inverted by 180 degrees, from the tops to the roots, respectively. In the specification, the X-direction and the Y-direction also refer to planar directions, and the Z-direction also refers to a thickness direction.

Moreover, in the specification, technical terms, such as "parallel" or "orthogonal", allow deviations enough to keep the effect of the present invention. For example, errors of about ±5° are allowed from the positional relationship of parallel or orthogonal in a strict sense.

### (First embodiment)

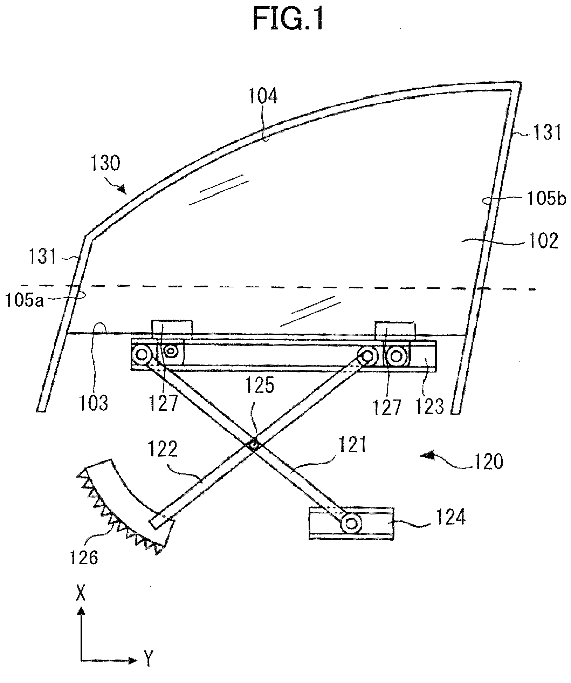

FIG. 1 is a configuration diagram depicting a state where a laminated glass for vehicle 102 that slides is mounted on a vehicle, according to a first embodiment.

In the first embodiment, the laminated glass for vehicle 102 is mounted on a door of the vehicle, and is moved up and down along a window frame 130 by an elevating unit 120. Especially, a part of the window frame 130 supporting side edges 105a and 105b of the laminated glass for vehicle 102 is also referred to as a glass run 131. The elevating unit 120 is an arm regulator, and configured with two arms 121, 122, an elevating rail 123, a fixed rail 124, a regulator (not shown), and the like. A dashed line in the drawing schematically indicates a position of a lower end of an opening section of a vehicle door (belt line).

The two arms 121, 122 are coupled rotatably to each other around a fulcrum 125 as an axle. The elevating rail 123 extends in the horizontal direction, and is a rail that can be moved up and down with respect to the vehicle door. Both upper ends of the arms 121, 122 are attached to the elevating rail 123 slidably in the horizontal direction. Moreover, the fixed rail 124 extends in the horizontal direction, and is a rail that is fixed to the vehicle door. A lower end of the arm 121 is attached to the fixed rail 124 slidably in the horizontal direction, and a lower end of the arm 122 is coupled to the regulator via a gear 126. In the above-described configuration, when the gear 126 is driven via the regulator, the arms 121, 122 rotate around the fulcrum 125 as an axle, and thereby the elevating rail 123 is moved up and down.

Holders 127 are mounted on a lower edge 103 of the laminated glass for vehicle 102, and the holders 127 are attached to the elevating rail 123 of the elevating unit 120.

When the laminated glass for vehicle 102 is moved up and down in the above-described state, the side edges 105a, 105b of the laminated glass 102 are sliding edges that always slide with the glass run 131 that is a part of the window frame 130. Moreover, an upper edge 104 of the laminated glass 102 is also a sliding edge that slides with the window frame 130 when the laminated glass 102 is closed.

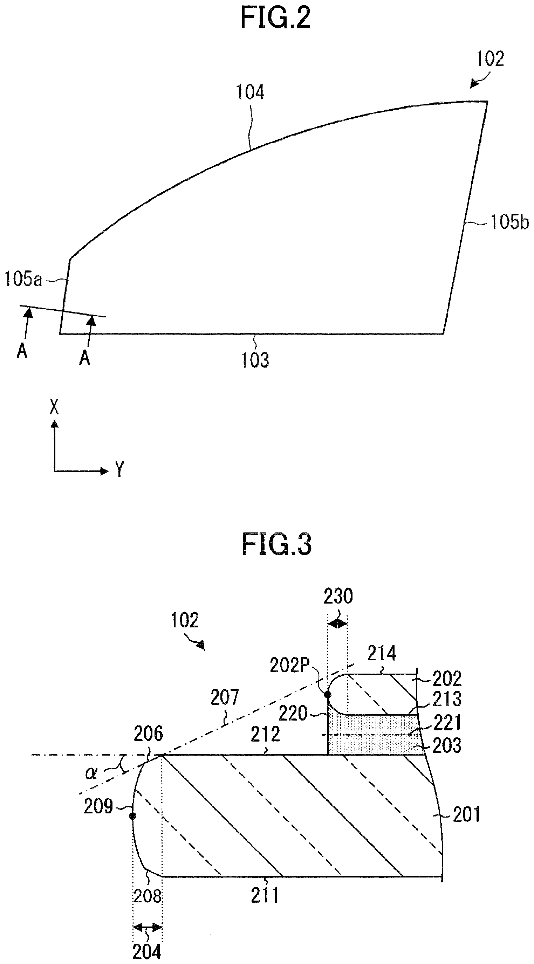

FIG. 2 is a plan view depicting a laminated glass that is a laminated plate according to the embodiment. FIG. 3 is a cross-sectional diagram depicting the laminated glass according to the first embodiment, cut along A-A in FIG. 2. In the following, the A-A cross section will be referred to as a cross section orthogonal to the outer periphery.

The laminated glass 102 is provided with a first glass plate 201 and a second glass plate 202 that is bonded to the first glass plate 201 via an intermediate film 203.

The first glass plate 201 is provided with a first main surface 211 that is arranged on a side opposite to the intermediate film 203, and a second main surface 212 that is in contact with the intermediate film 203.

The second glass plate 202 is provided with a third main surface 213 that is in contact with the intermediate film 203, and a fourth main surface 214 that is arranged on a side opposite to the intermediate film 203.

The intermediate film 203 is not particularly limited. The intermediate film 203 may be an intermediate film including only a single layer, or may be an intermediate film in which a plurality of layers are laminated. Moreover, for example, the intermediate film 203 may be an intermediate film thickness of which varies at different sites, such as a wedge shape.

The present invention is not limited to a glass in which two glass plates are laminated, but may be a laminated glass in which two or more glass plates are bonded via an intermediate film.

Moreover, on an outer end part of the laminated glass 102, a resin frame body may be attached.

The thickness of the first glass plate 201 is thicker than the thickness of the second glass plate 202. The thickness of the second glass plate 202 is preferably 0.2 mm or more but 1.0 mm or less, more preferably 0.3 mm or more but 0.8 mm or less, and further preferably 0.4 mm or more but 0.7 mm or less.

By making the thickness of the second glass plate 202 less than or equal to 1.0 mm, the laminated glass 102 can be made lighter. Moreover, by making the thickness of the second glass plate thicker than or equal to 0.2 mm, bending rigidity increases, and thereby an operator can handle the second glass plate 202 easily when conveying the second glass plate 202.

Moreover, in terms of sound insulating property, the thickness of the second glass plate 202 is preferably 0.4 mm or more but 1.8 mm or less, more preferably 0.5 mm or more but 1.6 mm or less, further preferably 0.7 mm or more but 1.6 mm or less, and further preferably 0.8 mm or more but 1.3 mm or less. By making the thickness of the second glass plate 202 within the ranges, the laminated glass 102 can be made lighter and degrading of the sound insulating property can be suppressed.

Moreover, the thickness of the first glass plate 201 is preferably 1.7 mm or more but 4.0 mm or less, more preferably 2.0 mm or more but 3.7 mm or less, and further preferably 2.5 mm or more but 3.5 mm or less.

By making the thickness of the first glass plate 201 less than or equal to 4.0 mm, the laminated glass 102 can be made lighter. Moreover, by making the thickness of the first glass plate 201 thicker than or equal to 1.5 mm, bending rigidity that is enough for the laminated glass 102 can be obtained.

Moreover, in terms of the sound insulating property, the thickness of the first glass plate 201 is preferably 1.5 mm or more but 3.5 mm or less, more preferably 1.5 mm or more but 2.8 mm or less, and further preferably 1.5 mm or more but 2.5 mm or less. By making the thickness of the first glass plate 201 within the ranges, the laminated glass 102 can be made lighter and degrading of the sound insulating property can be suppressed.

Moreover, a value obtained by dividing the thickness of the second glass plate 202 by the thickness of the first glass plate 201 is preferably 0.1 or more but 0.5 or less, more preferably 0.13 or more but 0.48 or less, and further preferably 0.15 or more but 0.45 or less. By making the value, obtained by dividing the thickness of the second glass plate by the thickness of the first glass plate, be greater than or equal to 0.1 but less than 0.5, the laminated glass 102, which is made lighter, and in which degradation of the sound insulation property can be suppressed, is obtained.

Moreover, in terms of the sound insulating property, the value obtained by dividing the thickness of the second glass plate 202 by the thickness of the first glass plate 201 is preferably greater than 0.5 but 0.9 or less, more preferably 0.55 or more but 0.85 or less, and further preferably 0.6 or more but 0.8 or less. By making the value, obtained by dividing the thickness of the second glass plate by the thickness of the first glass plate, be greater than or equal to 0.5 but less than 0.9, the laminated glass 102, which is made lighter, and in which degradation of the sound insulation property can be suppressed, is obtained.

Moreover, as illustrated in FIG. 3, the first glass plate 201 has a first chamfered region 204 that is chamfered at an end portion in at least a part of the side edge 105a of the laminated glass 102.

The first glass plate 201 has a first linear chamfered part 206 which extends diagonally to the second main surface 212 from an edge portion of the second main surface 212.

The second glass plate 202 is located on an inner surface side of an extended line 207 (a dot dashed line in FIG. 3) of the first linear chamfered part 206. The inner surface side refers to a position that is closer to a center of gravity of the glass plate.

According to the configuration described as above, when located on the inner surface side, the second glass plate 202 is less likely to make contact with an object. Therefore, even when an object collides with an end part of the laminated glass 102, an end part of the second glass plate 202 is less likely to be broken.

Moreover, when the laminated glass 102 slides while holding a foreign substance (e.g. a twig or a key of a vehicle) between the window frame 130 and the laminated glass 102, the foreign substance is maintained to an attitude of an angle along the first linear chamfered part 206 and the extended line 207 thereof. Therefore, the end part of the second glass plate 202 is less likely to make contact with the object, and the end part of the second glass plate is less likely to be broken.

A first angle α between the first linear chamfered part 206 and the second main surface 212 is preferably greater than 0° but 40° or less, more preferably 5° or more but 35° or less, and further preferably 8° or more but 30° or less.

When the first angle α is 40° or less, the second main surface 212 and the first linear chamfered part 206 are smoothly connected with each other, so that a sharp edge is less likely to occur on the boundary.

Moreover, when the first angle α is 5° or more, because an end part of glass rubs stably against an end surface shape of a grind stone, a breakage of a glass plate during the manufacturing process can be suppressed.

When the first linear chamfered part 206, as in the embodiment, is absent but only an arc-like chamfered part is present, the first angle α, if defined, is 0°.

Moreover, on the cross-sectional surface orthogonal to the outer periphery, a length of the first linear chamfered part 206 is preferably 0.05 mm or more, more preferably 0.1 mm or more, and further preferably 0.15 mm or more. By making the length as above, the end part of the second glass plate 202, which is thinner, is less likely to be in contact with a foreign substance, and the end part of the second glass plate 202 that is thinner is less likely to be broken.

Moreover, in the specification, the first linear chamfered part 206 is assumed to have a shape of not only a line in a strict sense but also an arc-like form that can be approximated to a line. The arc-like form that can be approximated to a line is not particularly limited, but a camber is on the order of 1×10⁻¹ mm or less, for example.

Chamfering of the first glass plate 201 is enabled by using a publicly known chamfering method. For example, the first glass plate 201 may be lightly chamfered, to form the first linear chamfered part 206 and/or a second linear chamfered part 208. Moreover, afterwards an ark-like chamfered part 209 may be formed by using a chamfering wheel. Alternatively, a chamfering wheel having a form corresponding to the second linear chamfered part 208 and the arc-like chamfered part 209 may be prepared in advance, and chamfering may be performed by pressing the first glass plate 201.

In addition, not only the side of the second main surface 212, but also the side of the first main surface 211 has the second linear chamfered part 208 in the same manner. In the embodiment, the second linear chamfered part is illustrated in a symmetric form centered on a line which passes through the center of the thickness of the first glass plate 201 and is parallel to the first and second main surfaces 211, 212. According to the above-described configuration, because the side, to which the intermediate film 203 of the first glass plate 201 is bonded, is not limited, handling on manufacturing or bonding the intermediate film 203 becomes easier.

Moreover, an end part of the first linear chamfered part 206 on a side opposite to the second main surface 212 may be connected to the first main surface 211 and the second linear chamfered part 208 via the arc-like chamfered part 209. By chamfering the end part in an arc-like form, a sharp edge disappears and the first glass plate 201 is less likely to be broken.

The second glass plate 202 may be provided on an end part with a second chamfered region 230 that is chamfered. A shape of the chamfering of the second glass plate 202 is not particularly limited. The shape may be the same as the first glass plate 201.

In the embodiment, the intermediate film 203 covers at least a part of the second chamfered region 230 of the second glass plate 202 on the side of the intermediate film 203. As a result, a shape of a cross section at an end part of the intermediate film 203 is asymmetric with respect to a line that passes through the center of the thickness of the intermediate film 203 and is parallel to the second and third main surfaces 212, 213. According to the above-described configuration, peeling of the second glass plate 202 and foaming on the end part of the laminated glass 102 can be suppressed.

Moreover, the intermediate film 203 is located on the inner surface side of the extended line 207 of the first linear chamfered part 206 (a dot-dashed line in FIG. 3). Accordingly, even when an object collides with the end part of the laminated glass 102 and even when the laminated glass 102 slides while holding a foreign substance between the window frame 130 and the laminated glass 102, the end part of the intermediate film 203 is less likely to be broken. When a part around the intermediate film 203 is broken, appearance becomes spoiled, such that the broken part appears to be white due to irregular reflection.

Moreover, in the embodiment, a cross-section contour 220 of the end part of the intermediate film 203 extends from an end point 202P of the second glass plate 202 toward the second main surface 212, and is orthogonal to the second main surface 212. According to the above-described shape, an edge cutting process for the intermediate film 203 after two glass plates are bonded becomes easier.

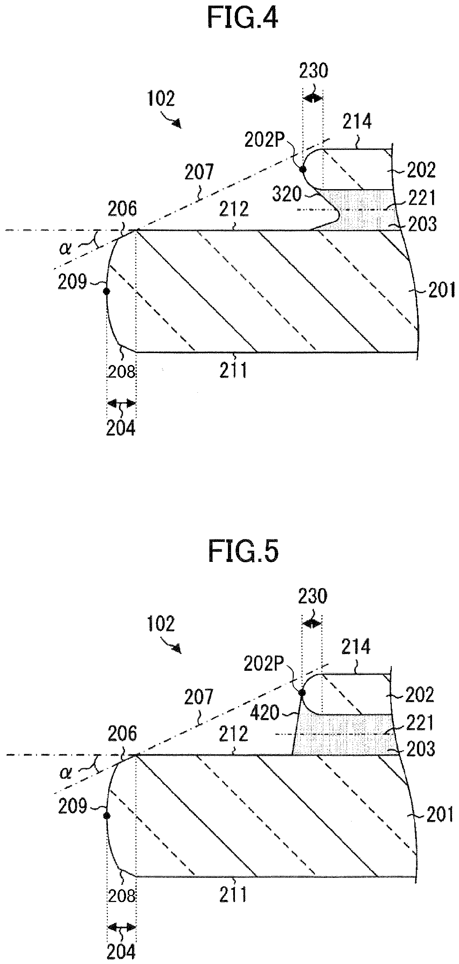

Moreover, FIGs. 4, 5 and 6 depict the laminated plates according to variations of the first embodiment. The variations are different from the first embodiment in shapes of the end surface and shapes of the cross section in a cross sectional view in the thickness direction of the intermediate film 203.

In FIG. 4, the end surface of the intermediate film 203 is on the inner surface side of the end point 202P of the second glass plate 202. Therefore, even when an object collides with the end part of the laminated glass 102 and even when the laminated glass 102 slides while holding a foreign substance between the window frame 130 and the laminated glass 102, the end part of the intermediate film 203 is less likely to be broken.

Moreover, in FIG. 4, the cross section contour 320 of the intermediate film 203 has a V-shape. A position of the vertex is on the second main surface side of a line 221 that passes through the center of the thickness of the intermediate film 203 and is parallel to the second and third main surfaces 212, 213. According to the above-described configuration, during the edge cutting process for the intermediate film 203, a sharp part at a tip of a cutter becomes less likely to contact the end part of the second glass plate 202.

Moreover, in the cross section contour 320 of the intermediate film 203, a tangent line around the vertex of the V-shape is continuous. Therefore, a crack is less likely to occur beginning at the vertex of the V-shape.

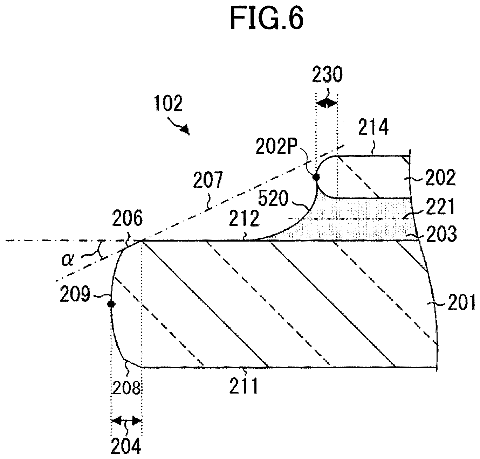

In FIGs. 5 and 6, at least a part of the end surface of the intermediate film 203 is on the outer surface side of the end point 202P of the second glass plate 202. Therefore, the edge cutting process for the intermediate film 203 becomes easier. Moreover, during the edge cutting process for the intermediate film 203, a sharp part at a tip of a cutter becomes less likely to contact the end part of the second glass plate 202.

Especially, FIG. 6 illustrates the end surface of the intermediate film 203 having an arc-like shape that is convex to the second main surface side. Therefore, the end part of the intermediate film 203 can be made inconspicuous. Moreover, during the edge cutting process for the intermediate film 203, a sharp part at a tip of a cutter becomes less likely to contact the end part of the second glass plate 202.

The edge cutting process for the intermediate film 203 is enabled by using a publicly known edge cutting means. For example, a blade such as a cutter or a chisel may be used. Moreover, the intermediate film 203 may be ground and/or polished by pressing the laminated glass 102 on a rotating polishing sheet.

In the embodiment, the above-described feature is depicted as at least a part of the side edge 105a of the laminated glass 102. However, the present invention is not limited to this. That is, all of the outer periphery of the laminated glass 102 may be provided with the feature. For example, when the lower edge is provided with the above-described feature, upon mounting the laminated glass on a vehicle, the end part of the second glass plate 202 is less likely to be broken, when inserting the laminated glass 102 below a belt line (dashed line in FIG. 1). Moreover, when the sliding edge (side edge 105a and/or side edge 105b and/or upper edge 104) is provided with the above-described feature, because a foreign substance is easy to be held between the window frame 130 and the laminated glass 102, obtained effect is great.

The "at least a part of the outer periphery" that satisfies the feature of the embodiment may be an exposure part. The "exposure part" refers to a site where the end surface of the second glass plate 022 and the end surface of the intermediate film are exposed to the outside on the end part of the laminated glass 102. Even when a black shielding film is provided on the end part of the laminated glass 102, if it is not covered by another member such as a resin frame body, it is an exposure part.

Moreover, when the laminated glass 102 has a curved shape, the first glass plate 201 and the second glass plate 202 may be subjected to bending forming by a conventionally known bending method. For example, the first glass plate 201 and the second glass plate 202 are overlaid and placed on a metallic mold having a shape of a ring. The first and second glass plates 201, 202 may be bent by heating above the softening point temperature, and causing the first and second glass plates to bend by own weights. Moreover, the first glass plate 201 and the second glass plate 202 may be subjected to press forming, respectively or overlaid in a state of being heated.

Moreover, the first glass plate 201 bent in a first bending shape and the second glass plate having a second shape different from the first bending shape may be bonded to each other via the intermediate film 203 to form the laminated glass 102. In such a laminated glass 102, two glass plates are bonded to each other in a state where any of or both the two glass plates are elastically bent (in the following, a manufacturing method of laminated glass by elastically bending any of or both the two glass plates and bonding the two glass plates will be referred to as a "cold bend").

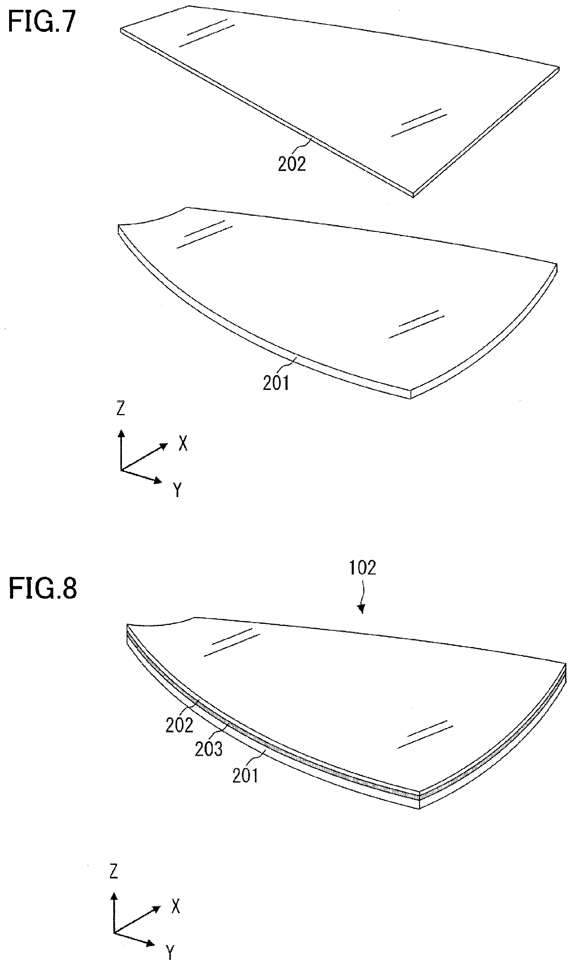

FIG. 7 is a diagram depicting a state of the first glass plate 201 and the second glass plate 202 before bonding to each other via the intermediate film 203. Moreover, FIG. 8 is a diagram depicting the laminated glass 102 after bonding via the intermediate film 203 from the state illustrated in FIG. 7.

When the laminated glass 102 has a bending shape of a single curve (cylindrical shape), among cross sections including a normal line at a center of gravity of the laminated glass 102, a cross section having the greatest curvature radius of the first main surface 211 will be referred to as a transverse section. On the transverse section, when the bonding via the intermediate film 203 is released, the second main surface 212 has a curvature radius less than the third main surface 213.

When the laminated glass 102 has a bending shape of a plurality of curves, among cross sections including a normal line at a center of gravity of the laminated glass 102, a cross section having the greatest curvature radius of the first main surface 211 will be referred to as a transverse section, and a cross section orthogonal to the transverse section will be referred to as a longitudinal section. On both the transverse section and the longitudinal section, when the bonding via the intermediate film 203 is released, the second main surface 212 has a curvature radius less than the third main surface 213.

In this way, the laminated glass 102, in which the first glass plate 201 bent in the first bending shape and the second glass plate 202 having the second shape different from the first bending shape are bonded to each other via the intermediate film 203, has a bending stress by an elastic deformation. Especially, when the thickness of the second glass plate 202 is small compared with the first glass plate 201, because two glass plates are bonded to each other in a state where mainly the second glass plate 202 is elastically deformed, the bending stress is formed in the second glass plate 202. Near the end part of the second glass plate 202, a bending compressive stress is formed, and around the center of the second glass plate 202 a bending tensile stress is formed.

The bending compressive stress and the bending tensile stress can be measured by a commercially supplied surface stress meter. When the second glass plate 202 is a strengthened glass, on the fourth main surface 214 of the second glass plate 202, both a residual stress and a bending stress occur. The residual stress is caused by strengthening, and occurs before bonding. In this case, the bending stress can be obtained by measuring a stress value after bonding and subtracting a stress value of the second glass plate 202 in a natural state from the measured value.

For example, after the first glass plate 201 is subjected to the bending forming by heat, to form a desired bending shape, the chemically strengthened second glass plate 202 having a shape of flat plate may be bonded to the first glass plate 201 via the intermediate film. For example, the first glass plate 201 may have a shape with a plurality of curves bent in two orthogonal directions, and the second glass plate 202 may have a shape of a flat plate. By making the first bending shape a shape having a plurality of curves, a window glass for vehicle excellent in design effect can be prepared, and it becomes possible to accommodate a variety of needs for vehicle designs. By making the second shape a shape of flat plate, a functional film can be formed easily. Furthermore, the bending forming process for the second glass plate 202 can be omitted.

In this way, by using a manufacturing method of laminated glass for elastically deforming any one of two glass plates and bonding the two glass plates, the following advantage is obtained. That is, conventionally, in order to obtain a laminated glass 102 having a bending shape in which a functional film is formed, a method is known for forming the functional film on any of or both two glass plates having a shape of a flat plate before forming, heating the two glass plates at around softening point temperature to perform bending forming, and bonding the two glass plates. However, in this method, because the functional film is heated at around the softening point temperature of the glass plates, the function thereof may be deteriorated.

On the other hand, when the functional film is formed on the second glass plate 202 having a shape of a flat plate, and by using the cold bend and bonding to the first glass plate 201 that is bent and formed in a desired shape, without heating the functional film at around the softening point temperature of the glass plate, the curved laminated glass 102 is obtained. Therefore, the function of the functional film can be achieved sufficiently.

Moreover, as another method of obtaining a laminated glass having a bending shape in which a functional film is formed, a method of forming the functional film on a surface of a glass plate after performing the bending forming for the glass plate in a desired bending shape is known. However, this method is more difficult than the method of forming the functional film on a glass plate having a shape of a flat plate, and the process and apparatus become complicated. By using the cold bend, because a functional film can be formed on the second glass plate 202 having a shape of a flat plate, the process and apparatus can be made simplified.

Moreover, by using the cold bend, the process of heating the second glass plate 202 at around the softening point temperature of the glass plate and performing bending forming can be omitted. Especially, when the thickness of the second glass plate 202 is 1 mm or less, it becomes difficult to maintain accuracy in bending forming due to heating, the method has a great effect.

Moreover, the second glass plate 202 used in the cold bend may have a second bending shape different from the first bending shape. In the embodiment, the curvature radius of the second bending shape is greater than the curvature radius of the first bending shape. The second glass plate 202 may be bent and formed into the second bending shape by heating or may be bent and formed during the process of chemically strengthening.

Performing bending forming during the process of chemically strengthening refers specifically to enlarging the way of entering the chemical strengthening for the third main surface 213 and the fourth main surface 214, and thereby the second glass plate 202 can be bent and formed so that the third main surface 213 is a convex surface and the fourth main surface 214 is a concave surface. By performing bending forming for the second glass plate 202 during the chemically strengthening, the process of heating the second glass plate 202 at around the softening point temperature of the glass plate and performing bending forming can be omitted. Moreover, when the second glass plate 202 has a bending shape, difference of curvature radii between the first and second bending shapes becomes smaller, and thereby the bending stress occurring on the cold bend can be reduced.

The degree of entering the chemical strengthening can be detected, for example, by comparing a quantity of Na of the third main surface 213 and a quantity of Na of the fourth main surface 214. The quantity of Na of the third main surface 213 indicates strength of the Kα-orbit measured by the X-ray fluorescence (XRF), and represents a quantity of Na from the surface to the depth of 3 µm of the third main surface 213. The same applies to the fourth main surface 214.

The cold bend is enabled by using a first glass plate 201 fixed by a temporary joining means, such as a tape, a laminated body of a second glass plate 202 and an intermediate film, publicly known preliminary crimping equipment such as a nip roller or a rubber glove, and an autoclave.

### (Second embodiment)

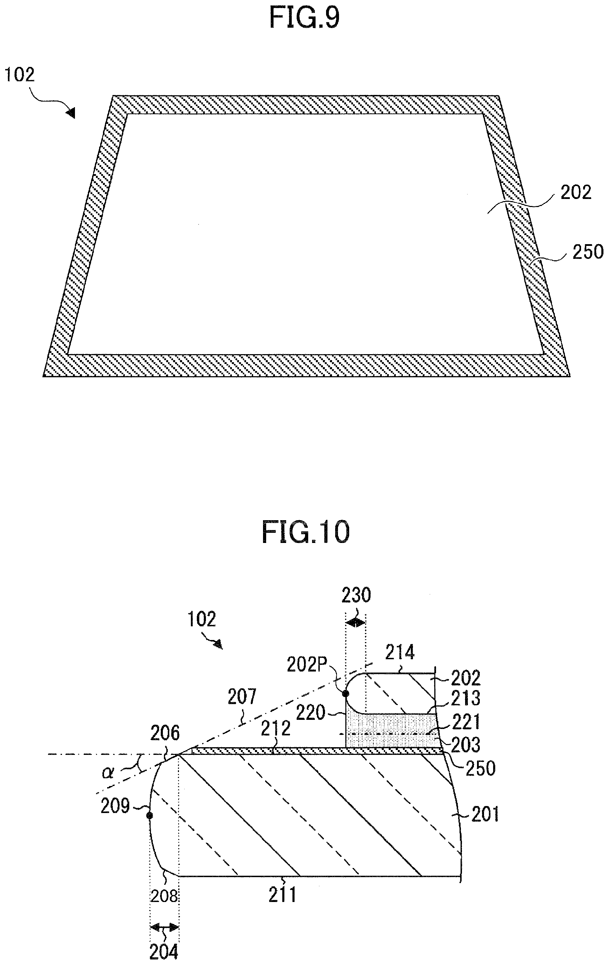

FIG. 9 is a plan view of a laminated glass used as a front windshield of a vehicle according to a second embodiment of the present invention. FIG. 10 is a cross-sectional view of the laminated glass used as the front windshield of the vehicle according to the second embodiment.

The laminated glass 102 illustrated in FIG. 9 and FIG. 10 is different from the first embodiment in that a shielding layer 250 that is obscure having dark color such as black (dark color ceramic layer) is formed in a band shape over a whole part on a circumferential part of the second main surface 212 of the first glass plate 201. In addition, because the other members are the same as in the laminated glass for vehicle 102 according to the first embodiment, the same reference numeral is assigned to the corresponding member, and an explanation thereof will be omitted.

FIG. 10 depicts an example of the shielding layer 250 arranged on the second main surface 212 of the first glass plate 201. However, the shielding layer 250 may be arranged on both or any of the third main surface 213 of the second glass plate 202 and the fourth main surface 214 of the second glass plate 202. The shielding layer 250 has a function of protecting urethane sealant or the like that bonds and retains the laminated glass 102 to the vehicle body from deterioration due to ultraviolet light. The shielding layer 250 is formed by applying a ceramic paste on a surface of the circumferential part of the first glass plate 201 and/or the second glass plate 202 and then calcining the ceramic paste.

Here, in the case of the laminated glass 102 in which the shielding layer 250 is not formed on the circumferential part of the second main surface 212 of the first glass plate 201, as illustrated in FIGs. 3 to 6, viewing the laminated glass 102 from outside the vehicle, the intermediate film 203 bonded to the chamfered part of the second glass plate 202 reflects irregularly, and appearance becomes spoiled.

However, when the shielding layer 250 is formed on the circumferential part of the second main surface 212 of the first glass plate 201, the intermediate film 203 bonded to the chamfered part of the second glass plate 202 does not reflect irregularly, and appearance is not spoiled.

In the configuration disclosed in Japanese Unexamined Patent Application Publication No. 2007-197288, there is a problem that, for example, when an object collides with an edge part of the laminated glass or when the laminated glass is slid while holding a foreign substance (e.g. a twig or a key of a vehicle), an edge part of the glass plate, a thickness of which is thinner, is likely to be broken.

The above-described problem also occurs in a laminated plate. The laminated plate includes a first plate, a second plate and an intermediate film that bonds the first and second plates.

According to an embodiment of the present invention, a laminated plate obtained by bonding plates, thicknesses of which are different from each other, and in which an edge part of the thinner plate is hard to break can be provided.

The present invention relates to a laminated plate, in which glass plates are bonded via an intermediate film.

## Claims

1. A laminated plate comprising a first plate and a second plate bonded to the first plate via an intermediate film, further comprising:
a first main surface of the first plate arranged on a side opposite to the intermediate film;
a second main surface of the first plate being in contact with the intermediate film;
a third main surface of the second plate being in contact with the intermediate film; and
a fourth main surface of the second plate arranged on a side opposite to the intermediate film,
wherein a thickness of the first plate is thicker than a thickness of the second plate,
wherein in at least a part of an outer periphery of the laminated plate, on a cross-sectional surface orthogonal to the outer periphery, the first plate has a first linear chamfered part which extends diagonally to the second main surface from an end portion of the second main surface, and the second plate is located on an inner surface side of an extended line of the first linear chamfered part, and
wherein the first and second plates are glass plates.

2. The laminated plate according to claim 1,
wherein an angle between the first linear chamfered part and the second main surface is greater than 0 degrees but less than or equal to 40 degrees.

3. The laminated plate according to claim 1 or 2,
wherein in the cross-sectional surface orthogonal to the outer periphery, a length of the first linear chamfered part is greater than or equal to 0.05 mm.

4. The laminated plate according to any one of claims 1 to 3,
wherein on the cross-sectional surface orthogonal to the outer periphery, the first plate has a second linear chamfered part which extends diagonally to the first main surface from an end portion of the first main surface, and an end portion of the first linear chamfered part and an end portion of the second linear chamfered part are connected to each other via an arc-like chamfered part.

5. The laminated plate according to any one of claims 1 to 4,
wherein on the cross-sectional surface orthogonal to the outer periphery, the intermediate film is located on an inner surface side of the extended line of the first linear chamfered part.

6. The laminated plate according to any one of claims 1 to 5,
wherein a cross-sectional shape at an end portion of the intermediate film is asymmetric with respect to a line that goes through a center of a thickness of the intermediate film, and is parallel to the second main surface and the third main surface.

7. The laminated plate according to any one of claims 1 to 6,
wherein an end surface of the intermediate film is located on an inner surface side of an end point of the second plate.

8. The laminated plate according to any one of claims 1 to 6,
wherein at least a part of an end surface of the intermediate film is located on an outer surface side of an end point of the second plate.

9. The laminated plate according to any one of claims 1 to 8,
wherein at least the part of the outer periphery is a sliding edge that slides with another member when mounted on a vehicle.

10. The laminated plate according to any one of claims 1 to 9,
wherein a ratio of the thickness of the second plate to the thickness of the first plate is greater than or equal to 0.1, but less than or equal to 0.5.

11. The laminated plate according to any one of claims 1 to 10,
wherein a transverse section is a cross-sectional surface, among cross-sectional surfaces each including a normal line at a center of gravity of the laminated plate, which has the greatest curvature radius of the first main surface, and on the transverse section, when bonding via the intermediate film is released, the second main surface has a curvature radius less than a curvature radius of the third main surface.

12. The laminated plate according to any one of claims 1 to 11,
wherein a transverse section is a cross-sectional surface, among cross-sectional surfaces each including a normal line at a center of gravity of the laminated plate, which has the greatest curvature radius of the first main surface, a longitudinal section is a cross-sectional surface orthogonal to the transverse section, and on both the transverse section and the longitudinal section, when bonding via the intermediate film is released, the second main surface has a curvature radius less than a curvature radius of the third main surface.

13. The laminated plate according to any one of claims 1 to 12,
wherein the second plate has a bending compressive stress near the end portion and a bending tensile stress around a center of the second plate.

## Patentansprüche

1. Laminierte Platte, umfassend eine erste Platte und eine zweite Platte, die an die erste Platte durch einen Zwischenfilm gebunden ist, weiter umfassend:
eine erste Hauptoberfläche der ersten Platte, angeordnet an einer dem Zwischenfilm gegenüberliegenden Seite;
eine zweite Hauptoberfläche der ersten Platte, die mit dem Zwischenfilm in Kontakt steht;
eine dritte Hauptoberfläche der zweiten Platte, die mit dem Zwischenfilm in Kontakt steht; und
eine vierte Hauptoberfläche der zweiten Platte, angeordnet an einer dem Zwischenfilm gegenüberliegenden Seite,
wobei eine Dicke der ersten Platte dicker als eine Dicke der zweiten Platte ist,
wobei in mindestens einem Teil eines äußeren Randes der laminierten Platte, auf einer Querschnittsoberfläche senkrecht zu dem äußeren Rand, die erste Platte einen ersten linear abgeschrägten Bereich aufweist, der sich diagonal zu der zweiten Hauptoberfläche von einem Endbereich der zweiten Hauptoberfläche erstreckt, und sich die zweite Platte an einer inneren Oberflächenseite einer verlängerten Linie des ersten linear abgeschrägten Bereichs befindet, und
wobei die ersten und zweiten Platten Glasplatten sind.

2. Laminierte Platte nach Anspruch 1,
wobei ein Winkel zwischen dem ersten abgeschrägten Bereich und der zweiten Hauptoberfläche größer als 0 Grad, aber kleiner als oder gleich 40 Grad ist.

3. Laminierte Platte nach Anspruch 1 oder 2,
wobei in der Querschnittsoberfläche senkrecht zu dem äußeren Rand eine Länge des ersten linear abgeschrägten Bereichs größer als oder gleich 0,05 mm ist.

4. Laminierte Platte nach einem der Ansprüche 1 bis 3,
wobei auf der Querschnittsoberfläche senkrecht zu dem äußeren Rand die erste Platte einen zweiten linear abgeschrägten Bereich aufweist, der sich diagonal zu der ersten Hauptoberfläche von einem Endbereich der ersten Hauptoberfläche erstreckt, und ein Endbereich des ersten linear abgeschrägten Bereichs und ein Endbereich des zweiten linear abgeschrägten Bereichs miteinander über einen bogenartig abgeschrägten Bereich verbunden sind.

5. Laminierte Platte nach einem der Ansprüche 1 bis 4,
wobei sich der Zwischenfilm auf der Querschnittsoberfläche senkrecht zu dem äußeren Rand an einer inneren Oberflächenseite der verlängerten Linie des ersten linear abgeschrägten Bereichs befindet.

6. Laminierte Platte nach einem der Ansprüche 1 bis 5,
wobei eine Querschnittsform an einem Endbereich des Zwischenfilms asymmetrisch in Bezug auf eine Linie ist, die durch eine Mitte einer Dicke des Zwischenfilms verläuft, und parallel zu der zweiten Hauptoberfläche und der dritten Hauptoberfläche ist.

7. Laminierte Platte nach einem der Ansprüche 1 bis 6,
wobei sich eine Endoberfläche des Zwischenfilms an einer inneren Oberflächenseite eines Endpunktes der zweiten Platte befindet.

8. Laminierte Platte nach einem der Ansprüche 1 bis 6,
wobei sich mindestens ein Teil einer Endoberfläche des Zwischenfilms an einer äußeren Oberflächenseite eines Endpunktes der zweiten Platte befindet.

9. Laminierte Platte nach einem der Ansprüche 1 bis 8,
wobei mindestens der Teil des äußeren Randes eine gleitende Kante ist, der mit einem anderen Element gleitet, wenn er an einem Fahrzeug montiert ist.

10. Laminierte Platte nach einem der Ansprüche 1 bis 9,
wobei ein Verhältnis der Dicke der zweiten Platte zu der Dicke der ersten Platte größer als oder gleich 0,1, aber kleiner als oder gleich 0,5 ist.

11. Laminierte Platte nach einem der Ansprüche 1 bis 10,
wobei ein Querabschnitt eine Querschnittsoberfläche ist, die unter Querschnittsoberflächen, die jeweils eine Normallinie an einem Schwerpunkt der laminierten Platte einschließen, den größten Krümmungsradius der ersten Hauptoberfläche aufweist, und an dem Querabschnitt, wenn das Binden über den Zwischenfilm gelöst wird, die zweite Hauptoberfläche einen Krümmungsradius kleiner als einen Krümmungsradius der dritten Hauptoberfläche aufweist.

12. Laminierte Platte nach einem der Ansprüche 1 bis 11,
wobei ein Querabschnitt eine Querschnittsoberfläche ist, die unter Querschnittsoberflächen, die jeweils eine Normallinie an einem Schwerpunkt der laminierten Platte einschließen, den größten Krümmungsradius der ersten Hauptoberfläche aufweist, ein Längsabschnitt eine Querschnittsoberfläche senkrecht zu dem Querabschnitt ist, und an beiden, dem Querabschnitt und dem Längsabschnitt, wenn das Binden über den Zwischenfilm gelöst wird, die zweite Hauptoberfläche einen Krümmungsradius kleiner als einen Krümmungsradius der dritten Hauptoberfläche aufweist.

13. Laminierte Platte nach einem der Ansprüche 1 bis 12,
wobei die zweite Platte eine Biegedruckspannung nahe des Endbereichs und eine Biegezugspannung um eine Mitte der zweiten Platte aufweist.

## Revendications

1. Plaque feuilletée comprenant une première plaque et une deuxième plaque collée à ladite première plaque par l'intermédiaire d'un film intermédiaire, comprenant également :
une première surface principale de la première plaque, disposée sur un côté opposé au film intermédiaire ;
une deuxième surface principale de la première plaque, qui est en contact avec le film intermédiaire ;
une troisième surface principale de la deuxième plaque, qui est en contact avec le film intermédiaire ; et
une quatrième surface principale de la deuxième plaque, qui est disposée sur un côté opposé au film intermédiaire,
une épaisseur de la première plaque étant plus grande qu'une épaisseur de la deuxième plaque,
dans une partie au moins d'une périphérie extérieure de la plaque feuilletée, sur une surface de section transversale orthogonale par rapport à la périphérie extérieure, la première plaque comportant une première partie biseautée linéaire qui s'étend en diagonale par rapport à la deuxième surface principale, à partir d'une partie d'extrémité de ladite deuxième surface principale, et la deuxième plaque se trouvant sur un côté de surface intérieure d'une ligne de prolongement de la première partie biseautée linéaire, et
les première et deuxième plaques étant des plaques en verre.

2. Plaque feuilletée selon la revendication 1, dans laquelle un angle entre la première partie biseautée linéaire et la deuxième surface principale est supérieur à 0 degré, mais inférieur ou égal à 40 degrés.

3. Plaque feuilletée selon la revendication 1 ou 2, dans laquelle dans la surface de section transversale orthogonale par rapport à la périphérie extérieure, une longueur de la première partie biseautée linéaire est supérieure ou égale à 0,05 mm.

4. Plaque feuilletée selon l'une quelconque des revendications 1 à 3, dans laquelle sur la surface de section transversale orthogonale par rapport à la périphérie extérieure, la première plaque comporte une deuxième partie biseautée linéaire qui s'étend en diagonale par rapport à la première surface principale, à partir d'une partie d'extrémité de ladite première surface principale, et une partie d'extrémité de la première partie biseautée linéaire et une partie d'extrémité de la deuxième partie biseautée linéaire sont reliées par l'intermédiaire d'une partie biseautée curviligne.

5. Plaque feuilletée selon l'une quelconque des revendications 1 à 4, dans laquelle sur la surface de section transversale orthogonale par rapport à la périphérie extérieure, le film intermédiaire se trouve sur un côté de surface intérieure de la ligne de prolongement de la première partie biseautée.

6. Plaque feuilletée selon l'une quelconque des revendications 1 à 5, dans laquelle une forme de section transversale au niveau d'une partie d'extrémité du film intermédiaire est asymétrique par rapport à une ligne qui passe par un centre d'une épaisseur du film intermédiaire, et est parallèle à la deuxième surface principale et à la troisième surface principale.

7. Plaque feuilletée selon l'une quelconque des revendications 1 à 6, dans laquelle une surface d'extrémité du film intermédiaire se trouve sur un côté de surface intérieure d'un point d'extrémité de la deuxième plaque.

8. Plaque feuilletée selon l'une quelconque des revendications 1 à 6, dans laquelle une partie au moins d'une surface d'extrémité du film intermédiaire se trouve sur un côté de surface extérieure d'un point d'extrémité de la deuxième plaque.

9. Plaque feuilletée selon l'une quelconque des revendications 1 à 8, dans laquelle au moins la partie de la périphérie extérieure est un bord de coulissement qui coulisse avec un autre élément quand il est monté sur un véhicule.

10. Plaque feuilletée selon l'une quelconque des revendications 1 à 9, dans laquelle un rapport de l'épaisseur de la deuxième plaque sur l'épaisseur de la première plaque est supérieur ou égal à 0,1, mais inférieur ou égal à 0,5.

11. Plaque feuilletée selon l'une quelconque des revendications 1 à 10, dans laquelle une section transversale est une surface de section transversale, parmi des surfaces de section transversale qui contiennent chacune une ligne normale, au centre de gravité de la plaque feuilletée, qui présente le rayon de courbure de la première surface principale le plus grand, et sur la section transversale, quand le collage par l'intermédiaire du film intermédiaire est supprimé, la deuxième surface principale présente un rayon de courbure inférieur à un rayon de courbure de la troisième surface principale.

12. Plaque feuilletée selon l'une quelconque des revendications 1 à 11, dans laquelle une section transversale est une surface de section transversale, parmi des surfaces de section transversale qui contiennent chacune une ligne normale, au centre de gravité de la plaque feuilletée, qui présente le rayon de courbure de la première surface principale le plus grand, une section longitudinale est une surface de section transversale orthogonale par rapport à la section transversale, et à la fois sur la section transversale et la section longitudinale, quand le collage par l'intermédiaire du film intermédiaire est supprimé, la deuxième surface principale présente un rayon de courbure inférieur à un rayon de courbure de la troisième surface principale.

13. Plaque feuilletée selon l'une quelconque des revendications 1 à 12, dans laquelle la deuxième plaque présente une contrainte de compression de cintrage près de la partie d'extrémité, et une contrainte de flexion de cintrage autour d'un centre de la deuxième plaque.
